# EUROPÄISCHE PATENTSCHRIFT

(11) **EP 4 314 565 B1**
(45) Veröffentlichungstag und Bekanntmachung des Hinweises auf die Patenterteilung: **26.11.2025**
(21) Anmeldenummer: 22712407.0
(22) Anmeldetag: 11.03.2022
(51) Int. Cl.: F04D 17/16, F04D 25/02, F04D 25/08, B25F 5/00, H02K 49/06, H02K 49/10

(54) **WERKZEUGMASCHINE MIT EINER MOTORWELLE UND EINEM LÜFTERRAD, WOBEI ZWISCHEN DER MOTORWELLE UND DEM LÜFTERRAD EINE MAGNETISCHE KOPPLUNG BESTEHT**
MACHINE TOOL WITH A MOTOR SHAFT AND A FAN WHEEL, WITH A MAGNETIC COUPLING BETWEEN THE MOTOR SHAFT AND THE FAN WHEEL
MACHINE-OUTIL AVEC UN ARBRE MOTEUR ET UNE ROUE DE VENTILATEUR, COMPORTANT UN ACCOUPLEMENT MAGNÉTIQUE ENTRE L'ARBRE DE MOTEUR ET LA ROUE DE VENTILATEUR

(30) Priorität: 26.03.2021 EP 21165184
(43) Veröffentlichungstag der Anmeldung: 07.02.2024
(73) Patentinhaber: Hilti Aktiengesellschaft, 9494 Schaan (LI)
(72) Erfinder: LACHER, Michael, 86830 Schwabmünchen (DE)
(74) Vertreter: Hilti Aktiengesellschaft Corporate Intellectual Property
(86) Internationale Anmeldenummer: PCT/EP2022/056286
(87) Internationale Veröffentlichungsnummer: WO 2022/200073

(56) Entgegenhaltungen:
- EP-A1- 3 598 613
- CH-A5- 664 242
- DE-A1- 10 355 378
- FR-A1- 2 819 119

## Beschreibung

Die vorliegende Erfindung betrifft eine Werkzeugmaschine mit einem Motor und einer Motorwelle, wobei ein Lüfterrad in der Werkzeugmaschine dazu eingerichtet ist, einen Luftstrom zur Kühlung des Motors zu erzeugen. Die Werkzeugmaschine ist dadurch gekennzeichnet, dass eine Kopplung zwischen dem Lüfterrad und der Motorwelle magnetisch ausgebildet ist, so dass die Motorwelle das Lüfterrad zu einer Drehbewegung mit einer Geschwindigkeit antreibt, die geringer ist als eine Geschwindigkeit der Motorwelle. Durch die magnetische Kopplung von Lüfterrad und Motorwelle können die Bewegungen der beiden Bauteile vorteilhafterweise voneinander entkoppelt werden, so dass ein Anstieg der Drehzahl der Motorwelle nicht automatisch auch zu einer erhöhten Geschwindigkeit am Lüfterrad führt. Dadurch können Lüfterverluste erheblich reduziert und der Wirkungsgrad des Motors der Werkzeugmaschine wesentlich verbessert werden. In einem zweiten Aspekt betrifft die Erfindung ein Verfahren zur Kühlung eines Motors einer Werkzeugmaschine, wobei zwischen einem Lüfterrad und einer Motorwelle der Werkzeugmaschine eine magnetische Kopplung besteht.

### Hintergrund der Erfindung:

Im Stand der Technik sind Werkzeugmaschinen bekannt, mit denen, beispielsweise auf Baustellen, schwere Arbeiten verrichtet werden können. Beispiele sind Kernbohrgeräte oder Schleif- oder Trenngeräte. Bei diesen Geräten wird üblicherweise ein Werkzeug, wie eine Bohrkrone oder ein scheibenförmiges Schleif- oder Trennwerkzeug, mit Hilfe eines Motors angetrieben. Dabei kann der Motor Wärme entwickeln, die mit Kühlvorrichtungen aus dem Bereich des Motors der Werkzeugmaschine abgeführt werden kann. Bekannt sind im Stand der Technik beispielsweise Lüfterräder, die aber üblicherweise auf der Welle des Motors der Werkzeugmaschine angeordnet vorliegen. Mit anderen Worten besteht eine starre, mechanische Verbindung zwischen dem Lüfterrad und der Motorwelle bzw. dem Motor. Diese starre, mechanische Verbindung führt dazu, dass sich Lüfterrad und Motor im Wesentlichen gleich schnell, d.h. mit derselben Drehzahl drehen.

Als Folge der starren Montage des Lüfterrads kann der Luftstrom, der mit dem Lüfterrad zur Kühlung des Motors der Werkzeugmaschine erzeugbar ist ("Kühl-Luftstrom"), nicht unabhängig von der Drehzahl des Motors eingestellt werden. Der Kühl-Luftstrom steigt bei konventionellen Werkzeugmaschinen, wie sie aus dem Stand der Technik bekannt sind, mit der Drehzahl der Einheit aus Lüfterrad und Motorwelle an. Die resultierenden Lüfterverluste steigen sogar mit der 3. Potenz der Drehzahl dieser Einheit. Dieser Anstieg verhält sich nachteiligerweise invers zu einem Bedarf des Motors an Kühlung bzw. Kühl-Luft. Es hat sich gezeigt, dass sich dieses unerwünschte Auseinanderfallen von Motordrehzahl und bereitstehender Kühl-Leistung durch den Kühl-Luftstrom bei der Verwendung von bürstenlosen Antrieben verstärken kann. Diese Verstärkung wird insbesondere bei bürstenlosen Motoren mit hoher Drehzahlspreizung beobachtet, also bei solchen bürstenlosen Motoren, bei denen sich minimale und maximale Drehzahlen des Antriebsmotors deutlich voneinander unterscheiden.

Um das unerwünschte Auseinanderfallen von Motordrehzahl und Kühl-Leistung bzw. die hohen Kühl-Leistungs-Verluste zu überwinden ist im Stand der Technik vorgeschlagen worden, Lüftungseinheiten mit eigenen Motoren zu verwenden, um die Kühl-Leistung unabhängig von der Motordrehzahl einstellen zu können. Allerdings sind solche Lüftungseinheiten oft sehr raumgreifend und schwer und führen dazu, dass Werkzeugmaschinen sperrig und unhandlich werden, was gerade bei den langen Arbeitszeiten auf dem Bau als anstrengend empfunden werden kann.

Eine aus dem Stand der Technik bekannte Werkzeugmaschine ist in EP 3 598 613 A1 beschrieben. Eine Kühl-Einheit mit magnetischer Kopplung ist aus der FR 2 819 119 A1 bekannt.

Die Aufgabe, die der vorliegenden Erfindung zugrunde liegt, besteht somit darin, die vorstehend beschriebenen Nachteile des Standes der Technik zu überwinden und eine Werkzeugmaschine bereitzustellen, bei der die Kühl-Leistung unabhängig von der Drehzahl der Motors der Werkzeugmaschine eingestellt werden kann, ohne dass eine Lüftungseinheit mit eigenem Motor verwendet werden muss. Ziel der Erfindung ist es insbesondere, kompakte und handliche Werkzeugmaschinen bereitzustellen, bei denen darüber hinaus Lüfterverluste, insbesondere bei hohen Motordrehzahlen, erheblich gesenkt werden können.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß vorgesehen ist eine Werkzeugmaschine mit einem Motor und einer Motorwelle gemäß Anspruch 1, wobei ein Lüfterrad in der Werkzeugmaschine dazu eingerichtet ist, einen Luftstrom zur Kühlung des Motors zu erzeugen. Die Werkzeugmaschine ist dadurch gekennzeichnet, dass eine Kopplung zwischen dem Lüfterrad und der Motorwelle magnetisch ausgebildet ist, so dass die Motorwelle das Lüfterrad zu einer Drehbewegung mit einer Geschwindigkeit antreibt, die geringer ist als eine Geschwindigkeit der Motorwelle. Es hat sich gezeigt, dass eine Abhängigkeit der Drehgeschwindigkeiten durch die Vorsehung der magnetischen Kopplung wesentlich reduziert werden kann. Dadurch führt eine höhere Geschwindigkeit der Motorwelle gerade nicht auch zu einer höheren Geschwindigkeit des Lüfterrads. Zwar ist die Motorwelle auch bei Vorsehung der magnetischen Kopplung dazu eingerichtet, das Lüfterrad anzutreiben, d.h. eine Drehbewegung des Lüfterrads zu bewirken. Allerdings bewegen sich die Motorwelle und das Lüfterrad durch die erfindungsgemäße magnetische Kopplung der Komponenten nicht mit derselben Drehgeschwindigkeit, sondern die Geschwindigkeit des Lüfterrads ist stets kleiner als die Geschwindigkeit der Motorwelle. Es wird daher im Sinne der Erfindung bevorzugt auch von einer Entkopplung der Geschwindigkeiten von Motorwelle und Lüfterrad gesprochen.

In einem weiteren Aspekt betrifft die Erfindung eine Kühl-Einheit für einen Motor einer Werkzeugmaschine gemäß Anspruch 9, wobei die Kühl-Einheit eine Motorwelle und ein Lüfterrad zur Erzeugung eines Luftstroms zur Kühlung des Motors der Werkzeugmaschine umfasst. Bei der vorgeschlagenen Kühl-Einheit ist eine Kopplung zwischen dem Lüfterrad und der Motorwelle magnetisch ausgebildet ist, so dass eine Abhängigkeit der Drehgeschwindigkeit des Lüfterrads und der Motorwelle erheblich reduziert werden kann.

Es ist im Sinne der Erfindung bevorzugt, dass das Lüfterrad auf der Motorwelle angeordnet vorliegt. Dabei besteht ein wesentlicher Vorteil der vorliegenden Erfindung darin, dass keine starre, mechanische Verbindung zwischen der Motorwelle und dem Lüfterrad besteht, sondern eine magnetische Kopplung. Durch die Vorsehung einer magnetischen Kopplung zwischen Lüfterrad und Motorwelle kann die aus dem Stand der Technik bekannte gemeinsame, gleichschnelle Bewegung von Lüfterrad und Motorwelle, die zu einer unzureichenden Versorgung des Motors mit kühlender Luft führen kann, vermieden werden. Stattdessen werden die Bewegungen des Lüfterrads und der Motorwelle voneinander entkoppelt, so dass eine Menge an zugeführter Luft zur Kühlung des Motors der vorgeschlagenen Werkzeugmaschine besser reguliert bzw. eingestellt werden kann. Aufgrund der magnetischen Kopplung zwischen Lüfterrad und Motorwelle erfolgt die Entkopplung der Bewegungen vorzugsweise bei hohen Motordrehzahlen.

Es ist im Sinne der Erfindung bevorzugt, dass die Geschwindigkeit der Bewegungen des Lüfterrads bzw. der Motorwelle unter Verwendung der Drehzahl n des jeweiligen Bauteils angeben wird. Durch die magnetische Kopplung zwischen Lüfterrad und Motorwelle kann somit vorteilhafterweise erreicht werden, dass die Drehzahl des Lüfterrads nicht mehr im gleichen Maße ansteigt wie die Drehzahl der Motorwelle bzw. des Motors. Dadurch können vorteilhafterweise die Verluste an Kühlleistung, die mit der 3. Potenz der Drehzahl ansteigen, wirksam vermieden werden. Darüber hinaus kann eine verbesserte Kühlung des Motors mit einem besser angepassten Kühl-Luftstrom bereitgestellt werden. Der Kühl-Luftstrom kann insbesondere auch dazu verwendet werden, die Leistungselektronik der Werkzeugmaschine zu kühlen. Es ist im Sinne der Erfindung bevorzugt, dass das Lüfterrad der Werkzeugmaschine dazu eingerichtet ist, einen Kühl-Luftstrom zu erzeugen, mit dem der Motor und/oder die Leistungselektronik der Werkzeugmaschine gekühlt werden kann.

Ein wesentlicher weiterer Vorteil der Erfindung besteht darin, dass mit der vorgeschlagenen Erfindung eine kostenreduzierte Kühlungslösung für eine Werkzeugmaschine angegeben werden kann, die sich ferner durch einen geringen Platzbedarf auszeichnet. Auf diese Weise können besonders kompakte Werkzeugmaschinen bereitgestellt werden. Insbesondere haben die Erfinder erkannt, dass die bei konventionellen Werkzeugmaschinen bekannten Lüfterverluste bei steigender Drehzahl des Motors durch die Ersetzung der starren Verbindung durch eine magnetische Kopplung zwischen Lüfterrad und Motorwelle erheblich reduziert werden können. Dadurch kann vorteilhafterweise auch eine Verbesserung des Gesamtwirkungsgrads des Motors bzw. der Werkzeugmaschine erreicht werden.

Das Lüfterrad weist vorzugsweise eine im Wesentlichen kreisförmige Grundfläche auf. Auf einer Oberseite des Lüfterrads können Führungselemente zur Führung und zum Transport des Luftstroms zur Kühlung des Motors der Werkzeugmaschine angeordnet vorliegen. Das Lüfterrad kann darüber hinaus eine zentrale Öffnung aufweisen, die vorzugsweise ebenfalls eine im Wesentlichen kreisförmige Grundfläche aufweist. Die Öffnung ist vorzugsweise mittig in dem Lüfterrad angeordnet. Die Öffnung kann dazu eingerichtet sein, die Motorwelle aufzunehmen. Mit anderen Worten kann die Motorwelle durch die Öffnung des Lüfterrads hindurch verlaufen, wobei gemäß der vorliegenden Erfindung keine starre, mechanische Verbindung zwischen der Motorwelle und dem Lüfterrad besteht, sondern eine magnetische Kopplung.

Es ist im Sinne der Erfindung bevorzugt, dass das Lüfterrad magnetische Bereiche zur Erzeugung der magnetischen Kopplung zwischen dem Lüfterrad und der Motorwelle umfasst. Es ist im Sinne der Erfindung insbesondere bevorzugt, dass es sich bei den magnetischen Bereichen um permanentmagnetische Bereiche handelt. Beispielsweise kann eine Anzahl von Permanentmagneten in dem Lüfterrad integriert vorliegen.

Die Integration der Permanentmagnete in das Lüfterrad kann beispielsweise dadurch erfolgen, dass die Permanentmagnete bei der Herstellung in das Material des Lüfterrads eingespritzt werden. Diese Ausgestaltung ist besonders vorteilhaft, wenn das Lüfterrad aus Kunststoff gebildet ist oder Kunststoff umfasst. Die Permanentmagnete können vorteilhafterweise die magnetischen Bereiche bilden, die zur Erzeugung der magnetischen Kopplung zwischen dem Lüfterrad und der Motorwelle vorgesehen sind. Beispielsweise können im Kontext der vorliegenden Erfindung 2 bis 20, bevorzugt 4 bis 14, mehr bevorzugt 6 bis 10 und am meisten bevorzugt 8 Permanentmagnete zum Einsatz kommen bzw. in dem Lüfterrad integriert vorgesehen sein.

Es ist erfindungsgemäß vorgesehen, dass das Lüfterrad einen Zahnkranz aufweist, wobei der Zahnkranz magnetische Bereiche zur Erzeugung der magnetischen Kopplung zwischen dem Lüfterrad und der Motorwelle umfasst. Der Zahnkranz des Lüfterrads wird daher im Sinne der Erfindung bevorzugt auch als "magnetischer Zahnkranz" bezeichnet. Der Zahnkranz weist Zähne auf, die vorzugsweise gleichmäßig um einen mittleren Bereich des Zahnkranzes angeordnet vorliegen können. Der Zahnkranz des Lüfterrads wird im Sinne der Erfindung auch als erster Zahnkranz bezeichnet.

Weiterhin ist erfindungsgemäß vorgesehen, , dass auch die Motorwelle einen Zahnkranz aufweist, der im Sinne der Erfindung auch als zweiter Zahnkranz bezeichnet wird. Auch dieser zweite Zahnkranz stellt einen magnetischen Zahnkranz im Sinne der Erfindung dar. Das bedeutet dass er magnetische Bereiche aufweist. Der zweite Zahnkranz der Motorwelle rotiert vorzugsweise mit derselben Geschwindigkeit, d.h. vorzugsweise mit derselben Drehzahl n, wie der Motor der Werkzeugmaschine. Somit ist erfindungsgemäß vorgesehen, dass das Lüfterrad einen ersten Zahnkranz und die Motorwelle einen zweiten Zahnkranz aufweist, wobei die magnetische Kopplung zwischen Motorwelle und Lüfterrad von den magnetischen Zahnkränzen bewirkt wird. Mit anderen Worten sind die Zahnkränze von Lüfterrad und Motorwelle dazu eingerichtet, die magnetische Kopplung zwischen Motorwelle und Lüfterrad zu erzeugen.

Es ist im Sinne der Erfindung bevorzugt, dass die Permanentmagnete bzw. die magnetischen Bereiche bevorzugt gleichmäßig verteilt in einem äußeren Bereich des Lüfterrads bzw. der Zahnkränze angeordnet sind. Zwischen den Permanentmagneten bzw. zwischen den magnetischen Bereichen liegen vorzugsweise nicht-magnetische Bereiche vor. Mit anderen Worten können die magnetischen Bereiche bzw. die Permanentmagnete von nicht-magnetischen Bereichen voneinander getrennt vorliegen. Die Permanentmagnete bzw. die magnetischen Bereiche können jeweils eine im Wesentlichen rechteckige oder eine trapezförmige Grundfläche aufweisen. Dabei kann eine innenliegende Seite der bevorzugt rechteckigen bzw. trapezförmigen Grundform kürzer ausgebildet sein als eine außenliegende Seite der Grundform der Permanentmagnete bzw. der magnetischen Bereiche. Die innenliegenden Seiten der Permanentmagnete bzw. der magnetischen Bereiche liegt vorzugsweise der Motorwelle zugewandt vor. Es ist im Sinne der Erfindung bevorzugt, dass die magnetischen Bereiche bzw. die Permanentmagnete in einer Grundplatte des Lüfterrads angeordnet vorliegen. Es kann aber auch bevorzugt sein, dass die magnetischen Bereiche bzw. die Permanentmagnete in den Führungselementen des Lüfterrads angeordnet vorliegen oder mit diesen zusammenfallen.

Es ist im Sinne der Erfindung bevorzugt, dass die magnetischen Bereiche bzw. die Permanentmagnete so zueinander ausgerichtet in dem Lüfterrad eingebracht vorliegen, dass sich jeweils ein Nordpol und ein Südpol des Permanentmagneten bzw. der magnetischen Bereiche gegenüberliegen. Vorzugsweise liegen die Pole der magnetischen Bereiche bzw. der Permanentmagnete in Umfangsrichtung des Lüfterrads vor, d.h. entlang eines gedachten konzentrischen Rings, der in einem äußeren Bereich des Lüfterrads vorgesehen sein kann. Tests haben gezeigt, dass sich durch die Integration der Permanentmagnete in dem Lüfterrad eine besonders gute Robustheit gegenüber Staub ergibt.

Es ist im Sinne der Erfindung bevorzugt, dass eine Anzahl der Zähne des zweiten Zahnkranzes mit der Anzahl der magnetischen Bereiche bzw. der Anzahl der Permanentmagneten des ersten Zahnkranzes bzw. des Lüfterrads korrespondiert. Das bedeutet im Sinne der Erfindung bevorzugt, dass der zweite Zahnkranz beispielsweise 2 bis 20, bevorzugt 4 bis 14, mehr bevorzugt 6 bis 10 und am meisten bevorzugt 8 Zähne aufweisen kann. Die Vorsehung der magnetischen Bereiche im Zahnkranz kann beispielsweise dadurch erreicht werden, dass in den Zähnen des Zahnkranzes Permanentmagnete oder ferromagnetische Einlagerungen eingearbeitet sind. Dies kann besonders dann vorteilhaft sein, wenn der Zahnkranz aus Kunststoff hergestellt wird. Durch die Verwendung von Kunststoff können besonders leichte Zahnkränze bereitgestellt werden. Es kann im Sinne der Erfindung auch bevorzugt sein, dass der Zahnkranz aus einem permanentmagnetischen Material gebildet ist oder ein permanentmagnetisches Material umfasst. Beispielsweise kann ferromagnetisches Eisen als Material und Ausgangsstoff für die Herstellung des Zahnkranzes verwendet werden. Es hat sich gezeigt, dass Zahnkränze aus Eisen als einfach Stanzteile besonders einfach hergestellt werden können. Alternativ können Zahnkränze aus Eisen direkt verpresst und somit einfach verbaut werden.

Die Anordnung bzw. Ausrichtung der magnetischen Bereiche bzw. der Permanentmagnete im zweiten Zahnkranz entspricht vorzugsweise der Anordnung bzw. Ausrichtung der magnetischen Bereiche bzw. der Permanentmagnete innerhalb des Lüfterrads bzw. innerhalb des ersten Zahnkranzes des Lüfterrads. Das bedeutet im Sinne der Erfindung bevorzugt, dass die magnetischen Bereiche bzw. die Permanentmagnete des zweiten Zahnkranzes in einem äußeren Bereich des Zahnkranzes angeordnet vorliegen, wobei dieser äußere Bereich vorzugsweise von den Zähnen des Zahnkranzes gebildet wird. Die magnetischen Bereiche bzw. die Permanentmagnete sind vorzugsweise so zueinander angeordnet bzw. ausgerichtet, dass sich jeweils ein Nordpol und ein Südpol gegenüber liegen. Mit anderen Worten können der Nordpol eines ersten Zahns und der Südpol eines zweiten Zahns des Zahnkranzes gegenüber voneinander angeordnet vorliegen. Es ist im Sinne der Erfindung bevorzugt, dass die Zähne des Zahnkranzes jochartige magnetische Brücken zu den Permanentmagneten oder den magnetischen Bereichen im Lüfterrad bzw. dessen Zahnkranz bilden. Die Zahnkränze können offenliegend oder beispielsweise in Kunststoff eingespritzt vorliegen. Die Zahnkränze mit ihren magnetischen Bereichen, die insbesondere in den Zähnen des Zahnkranzes vorliegen, können im Sinne der Erfindung bevorzugt als permanent- oder ferromagnetische Lochmaske bezeichnet werden. Es ist im Sinne der Erfindung bevorzugt, dass die Zahnkränze des Lüfterrads und der Motorwelle Magnetkopplungsringe darstellen, mit denen die magnetische Kopplung zwischen dem Lüfterrad und der Motorwelle hergestellt werden kann. Die magnetische Kopplung kommt insbesondere durch die Wechselwirkung der magnetischen Bereiche der Zahnkränze von Lüfterrad und Motorwelle zustande.

Es ist im Sinne der Erfindung vorgesehen, dass das Lüfterrad einen ersten Zahnkranz als ersten Magnetkopplungsring aufweist und die Motorwelle einen zweiten Zahnkranz als zweiten Magnetkopplungsring aufweist, wobei die magnetische Kopplung zwischen den Zahnkränzen der Bauteile "Lüfterrad" und "Motorwelle" erfolgt. Es ist im Sinne der Erfindung vorgesehen, dass der erste Zahnkranz und der zweite Zahnkranz im magnetischen Sinne zueinander korrespondierend ausgebildet sind. Das bedeutet im Sinne der Erfindung bevorzugt, dass die Zahnkränze in Bezug auf die Verteilung von magnetischen und nicht-magnetischen Bereichen ähnlich oder identisch zueinander ausgebildet sind. Es ist im Sinne der Erfindung ganz besonders bevorzugt, dass die Zahnkränze als magnetische Lochmasken ausgebildet sind.

In einer zweiten Ausgestaltung umfasst die Werkzeugmaschine einen Elektromagneten, der die magnetische Kopplung zwischen Lüfterrad und Motorwelle bewirkt. Dabei kann der Elektromagnet einen Grundkörper und eine Spule zur Erzeugung eines Magnetfelds aufweisen. Der Grundkörper kann insbesondere ein ferromagnetisches Material umfassen. Das bedeutet im Sinne der Erfindung bevorzugt, dass der Grundkörper aus einem ferromagnetischen Material, wie zum Beispiel Eisen, gebildet sein kann. Es kann im Sinne der Erfindung auch bevorzugt sein, dass der Grundkörper zumindest teilweise ein ferromagnetisches Material, wie Eisen, umfasst. Vorzugsweise umfasst der Grundkörper einen ersten Bereich, der von der Spule umgeben ist, und einen zweiten Bereich, der eine Öffnung aufweist, in der ein erster Zahnkranz des Lüfterrads und ein zweiter Zahnkranz der Motorwelle drehbar zueinander angeordnet vorliegen.

Es ist im Sinne der Erfindung bevorzugt, dass eine Abhängigkeit der Bewegungen der Zahnkränze von Lüfterrad und Motorwelle durch die Erfindung, insbesondere die magnetische Kopplung, im Vergleich zu einer starren Verbindung zwischen Lüfterrad und Motorwelle wesentlich reduziert werden kann. Das bedeutet im Sinne der Erfindung bevorzugt, dass eine Kopplung zwischen den Bewegungen des Lüfterrads und der Motorwelle durch die magnetische Kopplung zwischen den beiden Bauteilen deutlich weniger stark ausgeprägt ist als bei einer starren Verbindung, wie sie bei konventionellen Werkzeugmaschinen bekannt ist. Der Zahnkranz der Motorwelle bewegt sich vorzugsweise mit der Drehzahl bzw. Geschwindigkeit des Motors der Werkzeugmaschine. Mit der magnetischen Kopplung zwischen den beiden Zahnkränzen kann vorteilhafterweise erreicht werden, dass die Bewegung des Zahnkranzes des Lüfterrads und somit bevorzugt auch die Bewegung des Lüfterrads von der Bewegung der Motorwelle abgekoppelt wird. Dadurch kann die Abhängigkeit der Bewegung des Lüfterrads von der Bewegung der Motorwelle erheblich reduziert und ein Anstieg der Drehgeschwindigkeit des Lüfterrads bei höheren Motordrehzahlen, welcher mit erhöhten Lüfterverlusten verbunden ist, wirksam vermieden werden.

Es ist im Sinne der Erfindung bevorzugt, dass die Spule mit einem Strom beaufschlagt werden kann, um ein Magnetfeld zu erzeugen. Das Magnetfeld kann von dem bevorzugt ferromagnetisch ausgebildeten Grundkörper in den Bereichen der Zahnkränze von Lüfterrad und Motorwelle übertragen werden und so die magnetische Kopplung zwischen den Zahnkränzen hervorrufen. Tests haben gezeigt, dass die Ausgestaltung der Erfindung mit einem Elektromagneten mit dem Vorteil verbunden ist, dass der Kühl-Luftstrom durch eine Elektronik der Werkzeugmaschine gesteuert und eingestellt werden kann. Der Kühl-Luftstrom kann vorteilhafterweise insbesondere in Abhängigkeit vom Bedarf geregelt werden. Beispielsweise können im Kontext der vorliegenden Erfindung die Temperatur des Motors der Werkzeugmaschine und/oder die Temperatur der Elektronik ermittelt und als Grundlage für die Regelung bzw. die Einstellung des Kühl-Luftstroms verwendet werden. Darüber hinaus kann eine Umgebungstemperatur der Werkzeugmaschine berücksichtigt werden, um einen passenden Kühl-Luftstrom für den Motor der Werkzeugmaschine einzustellen. Die Einstellbarkeit des Kühl-Luftstroms stellt einen wesentlichen Vorteil der Ausgestaltung der Erfindung dar, bei der ein Elektromagnet verwendet wird, um eine magnetische Kopplung zwischen Lüfterrad und Motorwelle herzustellen.

Es ist im Sinne der Erfindung bevorzugt, dass das Magnetfeld, dass von dem Elektromagneten erzeugt wird, im Wesentlichen binär ein- und ausgeschaltet werden kann. Das kann vorzugsweise dadurch erreicht werden, dass der Strom, der durch die Spule des Elektromagneten fließt, ein- oder ausgeschaltet wird. Es ist im Sinne der Erfindung ganz besonders bevorzugt, dass dieser Strom geregelt, d.h. auf beliebige Werte zwischen 0 und 100 % eingestellt werden kann. Dadurch kann vorzugsweise auch die Stärke des erzeugten Magnetfelds eingestellt werden. Die Stärke des erzeugten Magnetfelds beeinflusst vorzugsweise die Stärke der magnetischen Kopplung zwischen Lüfterrad und Motorwelle, so dass durch die Einstellung des Stroms bzw. des Magnetfelds vorteilhafterweise auch die Stärke dieser magnetischen Kopplung eingestellt werden kann. Tests haben gezeigt, dass die Stärke der magnetischen Kopplung bestimmt, wie stark die Motorwelle das Lüfterrad antreibt. Mit anderen Worten kann die Stärke der magnetischen Kopplung den Abhängigkeitsgrad zwischen den Drehgeschwindigkeiten von Lüfterrad und Motorwelle bestimmen. Ein starkes Magnetfeld führt vorzugsweise zu einer starken magnetischen Kopplung zwischen Lüfterrad und Motorwelle. Dadurch wird das Lüfterrad stärker von der Motorwelle mitgenommen und eine Drehgeschwindigkeit des Lüfterrads ist nur ein wenig geringer als die Drehgeschwindigkeit der Motorwelle. Ein schwaches Magnetfeld führt vorzugsweise zu einer schwachen magnetischen Kopplung zwischen Lüfterrad und Motorwelle. Dadurch wird das Lüfterrad weniger stark von der Motorwelle mitgenommen und eine Drehgeschwindigkeit des Lüfterrads ist deutlich geringer als die Drehgeschwindigkeit der Motorwelle.

Mit der Erfindung kann insbesondere erreicht werden, dass die Werkzeugmaschine insbesondere nur noch dann gekühlt wird, wenn dies erforderlich ist. Dadurch kann der Einsatz des Lüfterrads erheblich reduziert werden, was vor allem in Weltregionen mit einer inhomogenen oder ausfallanfälligen Energie- bzw. Spannungsversorgung von Vorteil ist und den Betrieb des Werkzeuggeräts erheblich vereinfacht.

In einem zweiten Aspekt betrifft die Erfindung ein Verfahren zur Kühlung eines Motors einer Werkzeugmaschine, wobei zwischen einem Lüfterrad und einer Motorwelle der Werkzeugmaschine eine magnetische Kopplung besteht. Die magnetische Kopplung kann vorzugsweise zu einer Abkopplung der Bewegungen von Lüfterrad und Motorwelle voneinander führen, was im Sinne der Erfindung bevorzugt bedeutet, dass das Lüfterrad weniger stark von der Bewegung der Motorwelle "mitgenommen" wird, als wenn eine starre Verbindung zwischen den Bauteilen "Lüfterrad" und "Motorwelle" besteht. Dadurch wird insbesondere erreicht, dass das Lüfterrad einen raschen Anstieg in der Geschwindigkeit des Motors nicht mitmacht, sondern dass die Drehzahl und/oder Geschwindigkeit des Lüfterrads trotz der hohen Drehzahlen von Motor und Motorwelle bei geringeren Drehzahlen verbleiben kann. Die für die Werkzeugmaschine eingeführten Begriffe, Definitionen und technischen Vorteile gelten für das Kühlungsverfahren analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Der Schutzbereich der Erfindung ist jedoch ausschließlich durch die nachfolgenden Ansprüche bestimmt.

In den Figuren sind gleiche und gleichartige Komponenten mit gleichen Bezugszeichen beziffert. Es zeigen:
- Fig. 1: Seitenansicht einer Kühl-Einheit mit Motorwelle und Lüfterrad
- Fig. 2: Ansicht einer möglichen Anordnung von magnetischen Bereichen
- Fig. 3: Ansicht einer möglichen Ausgestaltung eines Zahnkranzes
- Fig. 4: Seitenansicht einer Kühl-Einheit mit Motorwelle, Lüfterrad und Elektromagnet

### Ausführungsbeispiele und Figurenbeschreibung:

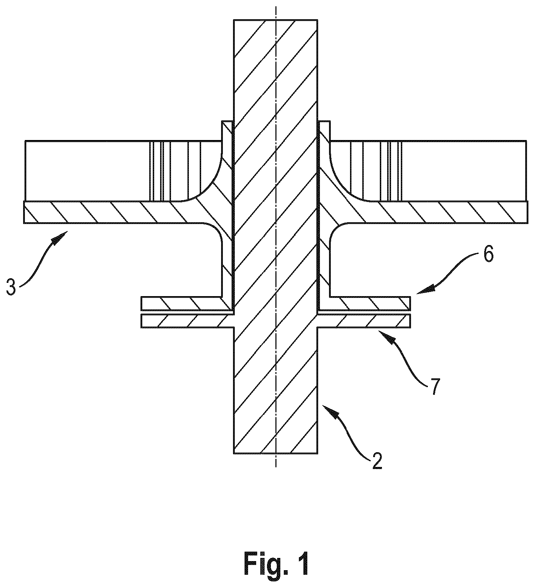

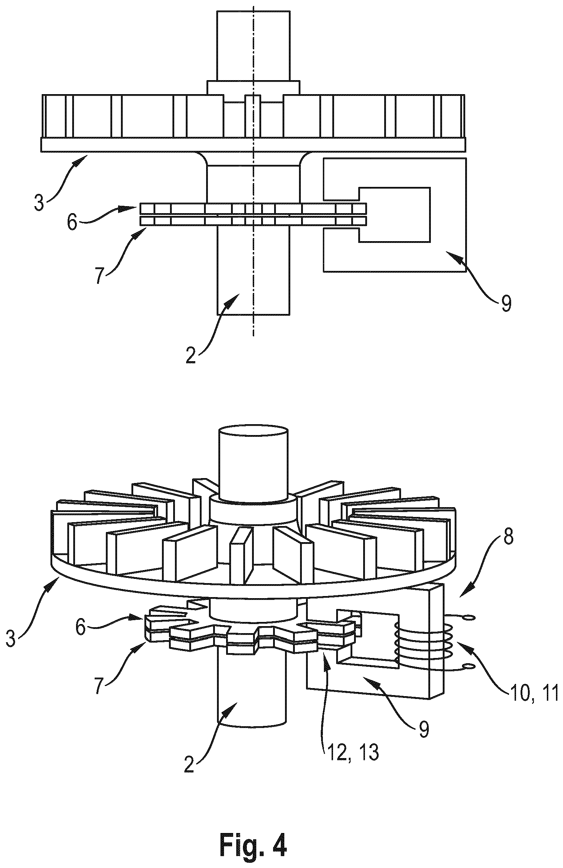

Figur 1 zeigt eine Seitenansicht einer Motorwelle 2 und eines Lüfterrads 3, die zusammen eine Kühl-Einheit für eine Werkzeugmaschine (nicht dargestellt) bilden. Die Motorwelle 2 ist mit dem Motor 1 (nicht dargestellt) verbunden und dreht sich bei Betrieb der Werkzeugmaschine vorzugsweise mit derselben Geschwindigkeit, d.h. Drehzahl, wie der Motor 1 selbst. Zwischen dem Lüfterrad 3 und der Motorwelle 2 besteht eine magnetische Kopplung, die gemäß einer ersten Ausgestaltung der Erfindung (Fig. 1 bis 3) von magnetischen Bereichen 4 oder Permanentmagneten 5 erzeugt werden kann. Gemäß einer zweiten Ausgestaltung der Erfindung (Fig. 4) kann die magnetische Kopplung von einem Elektromagneten 8 hervorgerufen werden. In dieser Ausgestaltung der Erfindung umfasst die vorgeschlagene Kühl-Einheit auch den Elektromagneten 8, der zur Erzeugung der magnetischen Kopplung zwischen Lüfterrad 3 und Motorwelle 2 vorgesehen ist.

Die magnetischen Bereiche 4 bzw. die Permanentmagnete 5 können beispielsweise in dem Lüfterrad 3 angeordnet vorliegen. Es ist aber erfindungsgemäß grundsätzlich vorgesehen, dass die magnetischen Bereiche 4 bzw. die Permanentmagnete 5 in einem Zahnkranz 6 angeordnet vorliegen, wobei der Zahnkranz 6 mit dem Lüfterrad 3 verbunden ist. Es ist im Sinne der Erfindung vorgesehen, dass das Lüfterrad 3 einen ersten Zahnkranz 6 aufweist, wobei der erste Zahnkranz 6 magnetische Bereiche 4 und/oder Permanentmagnete 5 umfasst, die die magnetische Kopplung mit der Motorwelle 2 hervorrufen können. Die Motorwelle 2 umfasst einen Zahnkranz 7, der im Sinne der Erfindung als zweiter Zahnkranz 7 bezeichnet wird. Es ist im Sinne der Erfindung vorgesehen, dass der zweite Zahnkranz 7 der Motorwelle 2 magnetisch korrespondierend zu dem ersten Zahnkranz 6 des Lüfterrads 3 ausgebildet ist. Das bedeutet im Sinne der Erfindung dass die Anordnung der magnetischen Bereiche 4 bzw. der Permanentmagnete 5 auf dem zweiten Zahnkranz 7 ähnlich oder identisch zu der Anordnung der magnetischen Bereiche 4 bzw. der Permanentmagnete 5 auf dem ersten Zahnkranz 6 ausgebildet ist. Die Zahnkränze 6, 7 bzw. ihre magnetischen Bereiche 4 und/oder ihre Permanentmagnete 5 wechselwirken so miteinander, dass eine Bewegung der Motorwelle 2 auf das Lüfterrad 3 übertragen wird. Die Erfinder haben erkannt, dass durch die Vorsehung einer magnetischen Kopplung zwischen dem Lüfterrad 3 und der Motorwelle 2 eine direkte Übertragung der Bewegung zwischen den Bauteilen 2, 3 unterbunden werden kann. Stattdessen wird eine Bewegung der Motorwelle 2 mit hohen Drehzahlen vorzugsweise in eine Bewegung des Lüfterrads 3 mit einer geringeren Drehzahl umgewandelt. Dadurch können Verluste an Kühl-Leistung, wie sie bei einer starren Verbindung zwischen Lüfterrad 3 und Motorwelle 2 vorkommen können, erheblich verringert werden.

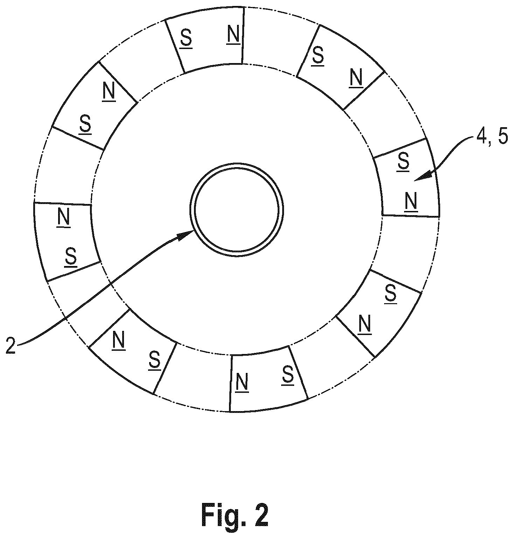

Fig. 2 zeigt eine mögliche Anordnung von magnetischen Bereichen 4 auf dem Lüfterrad 3 oder auf dem ersten Zahnkranz 6 des Lüfterrads. Die magnetischen Bereiche 4 können von kleinen Permanentmagneten 5 gebildet werden, die beispielsweise in das Material des Lüfterrads 3 oder des ersten Zahnkranzes 6 eingebracht werden können. Die magnetischen Bereiche 4 bzw. die Permanentmagnete 5 können in einem äußeren Bereich des Lüfterrads 3 oder seines ersten Zahnkranzes 6 angeordnet vorliegen, wobei sich jeweils ein Südpol und ein Nordpol zweier Permanentmagnete 5 gegenüber angeordnet sind. Mit anderen Worten sind die magnetischen Bereiche 4 bzw. die Permanentmagnete 5 so zueinander angeordnet, dass jeweils ein Nordpol und ein Südpol zueinander ausgerichtet sind.

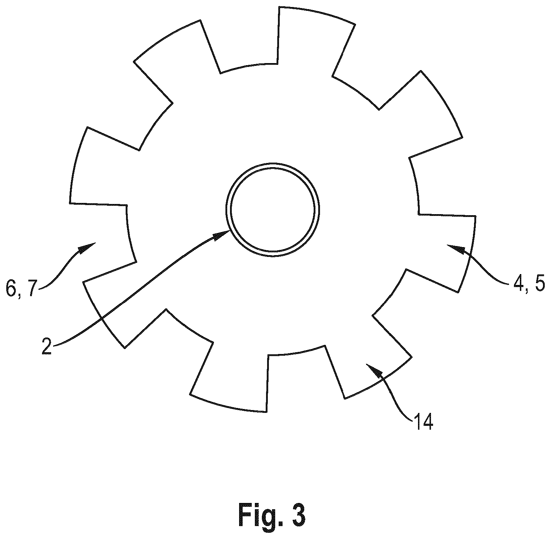

Fig. 3 zeigt eine mögliche Ausgestaltung eines Zahnkranzes 6, 7. Bei dem Zahnkranz kann es sich entweder um den ersten Zahnkranz 6 des Lüfterrads 3 oder um den zweiten Zahnkranz 7 der Motorwelle 2 handeln. Die Zahnkränze 6, 7 weisen Zähne 14 auf, wobei insbesondere die Zähne 14 des zweiten Zahnkranzes 7 bevorzugt jochartig ausgebildete magnetische Brücken zu den Permanentmagneten 5 oder den magnetischen Bereichen 4 im Lüfterrad 3 bzw. dessen Zahnkranz 6 bilden.

Fig. 4 zeigt eine zweite Ausgestaltung der Erfindung, bei der die magnetische Kopplung mit Hilfe eines Elektromagneten 8 erzeugt wird. Insbesondere zeigt Fig. 4 eine vorgeschlagene Kühl-Einheit mit Elektromagnet 8. Der Elektromagnet 8 umfasst einen Grundkörper 9 und eine Spule 10, wobei die Spule 10 dazu eingerichtet ist, ein Magnetfeld zu erzeugen. Die Spule 10 ist vorzugsweise um einen ersten Bereich 11 des Grundkörpers gewunden, während ein zweiter Bereich 12 des Grundkörpers 9 eine Öffnung 13 aufweist, in der die Zahnkränze 6, 7 des Lüfterrads 3 und der Motorwelle 2 angeordnet vorliegen können. Insbesondere zeigt Fig. 4 eine Motorwelle 2 mit Lüfterrad 3 und Elektromagnet 8.

Es ist im Sinne der Erfindung vorgesehen, dass eine Kopplung zwischen dem Lüfterrad 3 und der Motorwelle 2 magnetisch ausgebildet ist, so dass eine Anhängigkeit der Bewegung des Lüfterrads 3 von der Bewegung der Motorwelle 2 erheblich vermindert werden kann. In einer zweiten Ausgestaltung der Erfindung umfasst die Kühl-Einheit einen Elektromagneten 8, der die magnetische Kopplung zwischen Lüfterrad 3 und Motorwelle 2 bewirken kann. Dazu umfasst der Elektromagnet 8 einen Grundkörper 9 und eine Spule 10 zur Erzeugung eines Magnetfelds, wobei der Grundkörper 9 ein ferromagnetisches Material umfassen kann. Der Grundkörper 9 weist einen ersten Bereich 11 auf, der von der Spule 10 umgeben ist, und einen zweiten Bereich 12, der eine Öffnung 13 aufweist, in der ein erster Zahnkranz 6 des Lüfterrads 3 und ein zweiter Zahnkranz 7 der Motorwelle 2 drehbar zueinander angeordnet vorliegen.

### Bezugszeichenliste

- 1: Motor
- 2: Motorwelle
- 3: Lüfterrad
- 4: Magnetische Bereiche
- 5: Permanentmagnete
- 6: Erster Zahnkranz des Lüfterrads
- 7: Zweiter Zahnkranz der Motorwelle
- 8: Elektromagnet
- 9: Grundkörper
- 10: Spule
- 11: Erster Bereich des Grundkörpers
- 12: Zweiter Bereich des Grundkörper
- 13: Öffnung des Grundkörpers
- 14: Zähne der Zahnkränze

## Patentansprüche

1. Werkzeugmaschine mit einem Motor (1) und einer Motorwelle (2), wobei ein Lüfterrad (3) in der Werkzeugmaschine dazu eingerichtet ist, einen Luftstrom zur Kühlung des Motors (1) zu erzeugen
wobei eine Kopplung zwischen dem Lüfterrad (3) und der Motorwelle (2) magnetisch ausgebildet ist, so dass die Motorwelle (2) das Lüfterrad (3) zu einer Drehbewegung mit einer Geschwindigkeit antreibt, die geringer ist als eine Geschwindigkeit der Motorwelle (2)
**dadurch gekennzeichnet, dass**
das Lüfterrad (3) einen ersten Zahnkranz (6) aufweist, wobei der erste Zahnkranz (6) magnetische Bereiche (4) zur Erzeugung der magnetischen Kopplung zwischen dem Lüfterrad (3) und der Motorwelle (2) umfasst,
und dass die Motorwelle (2) einen zweiten Zahnkranz (7) aufweist, wobei der zweite Zahnkranz (7) magnetisch korrespondierend zum ersten Zahnkranz (6) des Lüfterrads (3) oder zum Lüfterrad (3) ausgebildet ist.

2. Werkzeugmaschine nach Anspruch 1
**dadurch gekennzeichnet, dass**
das Lüfterrad (3) magnetische Bereiche (4) zur Erzeugung der magnetischen Kopplung zwischen dem Lüfterrad (3) und der Motorwelle (2) umfasst.

3. Werkzeugmaschine nach Anspruch 1 oder 2
**dadurch gekennzeichnet, dass**
eine Anzahl von Permanentmagneten (5) in dem Lüfterrad (3) integriert vorliegt.

4. Werkzeugmaschine nach Anspruch 1
**dadurch gekennzeichnet, dass**
die Werkzeugmaschine einen Elektromagneten (8) umfasst, der die magnetische Kopplung zwischen Lüfterrad (3) und Motorwelle (2) bewirkt.

5. Werkzeugmaschine nach Anspruch 4
**dadurch gekennzeichnet, dass**
der Elektromagnet (8) einen Grundkörper (9) und eine Spule (10) zur Erzeugung eines Magnetfelds aufweist.

6. Werkzeugmaschine nach Anspruch 5
**dadurch gekennzeichnet, dass**
der Grundkörper (9) ein ferromagnetisches Material umfasst.

7. Werkzeugmaschine nach einem der Ansprüche 5 oder 6
**dadurch gekennzeichnet, dass**
der Grundkörper (9) einen ersten Bereich (11) umfasst, der von der Spule (10) umgeben ist, und einen zweiten Bereich (12) , der eine Öffnung (13) aufweist, in der ein erster Zahnkranz (6) des Lüfterrads (3) und ein zweiter Zahnkranz (7) der Motorwelle (2) drehbar zueinander angeordnet vorliegen.

8. Verfahren zur Kühlung eines Motors (1) einer Werkzeugmaschine nach einem der vorhergehenden Ansprüche
**dadurch gekennzeichnet, dass**
zwischen einem Lüfterrad (3) und einer Motorwelle (2) der Werkzeugmaschine eine magnetische Kopplung besteht.

9. Kühl-Einheit für einen Motor (1) einer Werkzeugmaschine, wobei die Kühl-Einheit eine Motorwelle (2) und ein Lüfterrad (3) zur Erzeugung eines Luftstroms zur Kühlung des Motors (1) der Werkzeugmaschine umfasst,
wobei eine Kopplung zwischen dem Lüfterrad (3) und der Motorwelle (2) magnetisch ausgebildet ist, so dass die Motorwelle (2) das Lüfterrad (3) zu einer Drehbewegung mit einer Geschwindigkeit antreibt, die geringer ist als eine Geschwindigkeit der Motorwelle (2)
**dadurch gekennzeichnet, dass**
das Lüfterrad (3) einen ersten Zahnkranz (6) aufweist, wobei der erste Zahnkranz (6) magnetische Bereiche (4) zur Erzeugung der magnetischen Kopplung zwischen dem Lüfterrad (3) und der Motorwelle (2) umfasst,
und dass die Motorwelle (2) einen zweiten Zahnkranz (7) aufweist, wobei der zweite Zahnkranz (7) magnetisch korrespondierend zum ersten Zahnkranz (6) des Lüfterrads (3) oder zum Lüfterrad (3) ausgebildet ist.

10. Kühl-Einheit nach Anspruch 9
**dadurch gekennzeichnet, dass**
die Kühl-Einheit einen Elektromagneten (8) umfasst, der die magnetische Kopplung zwischen Lüfterrad (3) und Motorwelle (2) bewirkt.

11. Kühl-Einheit nach Anspruch 10
**dadurch gekennzeichnet, dass**
der Elektromagnet (8) einen Grundkörper (9) und eine Spule (10) zur Erzeugung eines Magnetfelds aufweist.

12. Kühl-Einheit nach Anspruch 11
**dadurch gekennzeichnet, dass**
der Grundkörper (9) ein ferromagnetisches Material umfasst.

13. Kühl-Einheit nach einem der Ansprüche 11 oder 12
**dadurch gekennzeichnet, dass**
der Grundkörper (9) einen ersten Bereich (11) umfasst, der von der Spule (10) umgeben ist, und einen zweiten Bereich (12) , der eine Öffnung (13) aufweist, in der ein erster Zahnkranz (6) des Lüfterrads (3) und ein zweiter Zahnkranz (7) der Motorwelle (2) drehbar zueinander angeordnet vorliegen.

## Claims

1. Power tool having a motor (1) and a motor shaft (2), wherein a fan wheel (3) in the power tool is designed to generate an air flow for cooling the motor (1),
wherein a coupling is formed magnetically between the fan wheel (3) and the motor shaft (2) such that the motor shaft (2) drives the fan wheel (3) in a rotary movement with a speed that is less than a speed of the motor shaft (2),
**characterized in that**
the fan wheel (3) has a first sprocket (6), wherein the first sprocket (6) comprises magnetic regions (4) for creating the magnetic coupling between the fan wheel (3) and the motor shaft (2),
and **in that** the motor shaft (2) has a second sprocket (7), wherein the second sprocket (7) is magnetic in a manner corresponding to the first sprocket (6) of the fan wheel (3) or to the fan wheel (3).

2. Power tool according to Claim 1,
**characterized in that**
the fan wheel (3) comprises magnetic regions (4) for creating the magnetic coupling between the fan wheel (3) and the motor shaft (2).

3. Power tool according to Claim 1 or 2,
**characterized in that**
a number of permanent magnets (5) are integrated in the fan wheel (3).

4. Power tool according to Claim 1,
**characterized in that**
the power tool comprises an electromagnet (8) that brings about the magnetic coupling between the fan wheel (3) and motor shaft (2).

5. Power tool according to Claim 4,
**characterized in that**
the electromagnet (8) has a basic body (9) and a coil (10) for generating a magnetic field.

6. Power tool according to Claim 5,
**characterized in that**
the basic body (9) comprises a ferromagnetic material.

7. Power tool according to either of Claims 5 and 6,
**characterized in that**
the basic body (9) comprises a first region (11), which is surrounded by the coil (10), and a second region (12), which has an opening (13) in which a first sprocket (6) of the fan wheel (3) and a second sprocket (7) of the motor shaft (2) are arranged so as to be rotatable with respect to one another.

8. Method for cooling a motor (1) of a power tool according to one of the preceding claims,
**characterized in that**
there is a magnetic coupling between a fan wheel (3) and a motor shaft (2) of the power tool.

9. Cooling unit for a motor (1) of a power tool, wherein the cooling unit comprises a motor shaft (2) and a fan wheel (3) for generating an air flow for cooling the motor (1) of the power tool,
wherein a coupling is formed magnetically between the fan wheel (3) and the motor shaft (2) such that the motor shaft (2) drives the fan wheel (3) in a rotary movement with a speed that is less than a speed of the motor shaft (2),
**characterized in that**
the fan wheel (3) has a first sprocket (6), wherein the first sprocket (6) comprises magnetic regions (4) for creating the magnetic coupling between the fan wheel (3) and the motor shaft (2),
and **in that** the motor shaft (2) has a second sprocket (7), wherein the second sprocket (7) is magnetic in a manner corresponding to the first sprocket (6) of the fan wheel (3) or to the fan wheel (3).

10. Cooling unit according to Claim 9,
**characterized in that**
the cooling unit comprises an electromagnet (8) that brings about the magnetic coupling between the fan wheel (3) and motor shaft (2).

11. Cooling unit according to Claim 10,
**characterized in that**
the electromagnet (8) has a basic body (9) and a coil (10) for generating a magnetic field.

12. Cooling unit according to Claim 11,
**characterized in that**
the basic body (9) comprises a ferromagnetic material.

13. Cooling unit according to either of Claims 11 and 12,
**characterized in that**
the basic body (9) comprises a first region (11), which is surrounded by the coil (10), and a second region (12), which has an opening (13) in which a first sprocket (6) of the fan wheel (3) and a second sprocket (7) of the motor shaft (2) are arranged so as to be rotatable with respect to one another.

## Revendications

1. Machine-outil comprenant un moteur (1) et un arbre de moteur (2), une roue de ventilateur (3) dans la machine-outil étant conçue pour produire un flux d'air destiné à refroidir le moteur (1)
un couplage entre la roue de ventilateur (3) et l'arbre de moteur (2) étant formé magnétiquement, de sorte que l'arbre de moteur (2) entraîne la roue de ventilateur (3) en un mouvement de rotation à une vitesse qui est inférieure à une vitesse de l'arbre de moteur (2).
**caractérisée en ce que**
la roue de ventilateur (3) possède une première couronne dentée (6), la première couronne dentée (6) comportant des zones magnétiques (4) destinées à générer le couplage magnétique entre la roue de ventilateur (3) et l'arbre de moteur (2),
et **en ce que** l'arbre de moteur (2) possède une deuxième couronne dentée (7), la deuxième couronne dentée (7) étant configurée de manière magnétiquement correspondante à la première couronne dentée (6) de la roue de ventilateur (3) ou à la roue de ventilateur (3).

2. Machine-outil selon la revendication 1,
**caractérisée en ce que**
la roue de ventilateur (3) comporte des zones magnétiques (4) servant à générer le couplage magnétique entre la roue de ventilateur (3) et l'arbre de moteur (2).

3. Machine-outil selon la revendication 1 ou 2,
**caractérisée en ce que**
un certain nombre d'aimants permanents (5) sont intégrés dans la roue de ventilateur (3).

4. Machine-outil selon la revendication 1,
**caractérisée en ce que**
la machine-outil comporte un électroaimant (8) qui produit le couplage magnétique entre la roue de ventilateur (3) et l'arbre de moteur (2).

5. Machine-outil selon la revendication 4,
**caractérisée en ce que**
l'électroaimant (8) possède un corps de base (9) et une bobine (10) destinée à générer un champ magnétique.

6. Machine-outil selon la revendication 5,
**caractérisée en ce que**
le corps de base (9) comporte un matériau ferromagnétique.

7. Machine-outil selon l'une des revendications 5 ou 6,
**caractérisée en ce que**
le corps de base (9) comporte une première zone (11) qui est entourée par la bobine (10) et une deuxième zone (12) qui possède une ouverture (13) dans laquelle se trouvent une première couronne dentée (6) de la roue de ventilateur (3) et une deuxième couronne dentée (7) de l'arbre de moteur (2), disposées de manière à pouvoir tourner l'une par rapport à l'autre.

8. Procédé de refroidissement d'un moteur (1) d'une machine-outil selon l'une des revendications précédentes
**caractérisé en ce que**
il existe un couplage magnétique entre une roue de ventilateur (3) et un arbre de moteur (2) de la machine-outil.

9. Unité de refroidissement pour un moteur (1) d'une machine-outil, l'unité de refroidissement comprenant un arbre de moteur (2) et une roue de ventilateur (3) servant à générer un flux d'air destiné à refroidir le moteur (1) de la machine-outil,
un couplage entre la roue de ventilateur (3) et l'arbre de moteur (2) étant formé magnétiquement, de sorte que l'arbre de moteur (2) entraîne la roue de ventilateur (3) en un mouvement de rotation à une vitesse qui est inférieure à une vitesse de l'arbre de moteur (2).
**caractérisée en ce que**
la roue de ventilateur (3) possède une première couronne dentée (6), la première couronne dentée (6) comportant des zones magnétiques (4) destinées à générer le couplage magnétique entre la roue de ventilateur (3) et l'arbre de moteur (2),
et **en ce que** l'arbre de moteur (2) possède une deuxième couronne dentée (7), la deuxième couronne dentée (7) étant configurée de manière magnétiquement correspondante à la première couronne dentée (6) de la roue de ventilateur (3) ou à la roue de ventilateur (3).

10. Unité de refroidissement selon la revendication 9,
**caractérisée en ce que**
l'unité de refroidissement comporte un électroaimant (8) qui produit le couplage magnétique entre la roue de ventilateur (3) et l'arbre de moteur (2).

11. Unité de refroidissement selon la revendication 10,
**caractérisée en ce que**
l'électroaimant (8) possède un corps de base (9) et une bobine (10) destinée à générer un champ magnétique.

12. Unité de refroidissement selon la revendication 11,
**caractérisée en ce que**
le corps de base (9) comporte un matériau ferromagnétique.

13. Unité de refroidissement selon l'une des revendications 11 ou 12,
**caractérisée en ce que**
le corps de base (9) comporte une première zone (11) qui est entourée par la bobine (10) et une deuxième zone (12) qui possède une ouverture (13) dans laquelle se trouvent une première couronne dentée (6) de la roue de ventilateur (3) et une deuxième couronne dentée (7) de l'arbre de moteur (2), disposées de manière à pouvoir tourner l'une par rapport à l'autre.
